Europäisches Patentamt

European Patent Office

Office européen des brevets

(19)

(11) Publication number: **0 098 817**
**B1**

(12) EUROPEAN PATENT SPECIFICATION

(45) Date of publication of patent specification: **30.12.86**

(51) Int. Cl.⁴: **B 60 B 27/00,** F 16 C 35/06

(21) Application number: **83850156.7**

(22) Date of filing: **07.06.83**

(54) Hub arrangement for a driven vehicle wheel.

(30) Priority: **09.06.82 SE 8203574**

(43) Date of publication of application:
**18.01.84 Bulletin 84/03**

(45) Publication of the grant of the patent:
**30.12.86 Bulletin 86/52**

(84) Designated Contracting States:
**DE FR GB IT NL SE**

(56) References cited:
**DE-B-1 806 566**
**DE-U-1 956 130**
**FR-A-2 419 655**
**GB-A-1 297 368**

**AUTOMOTIVE ENGINEERING, vol. 89, no. 10,
October 1981, Dallas"Tapered roller bearings
popular for US hub units", pages 88-91**

(73) Proprietor: **AB VOLVO**
**Torslanda**
**S-405 08 Göteborg (SE)**

(72) Inventor: **Akselsen, Ivar**
**Gamla Tingstadsgatan 46**
**S-422 44 Hisingsbacka (SE)**
Inventor: **Callmann, Alf**
**Nordasgatan 2 D**
**S-416 71 Göteborg (SE)**

(74) Representative: **Hellbom, Lars Olof et al**
**H. Albihns Patentbyra AB Box 7664**
**S-103 94 Stockholm (SE)**

Courier Press, Leamington Spa, England.

## Description

The present invention relates to a hub arrangement for a driven vehicle wheel, comprising a wheel hub mounted on an axle casing in axially inner and outer rolling-contact bearings, which hub is joined, via a spline connection of smaller diameter than the outer diameter of the bearings, to an axle shaft in the axle casing.

In heavy vehicles such as trucks for example, the torque from the differential is transmitted to the drive wheels via axle shafts mounted in an axle casing, which are coupled to the wheel hub via a flange or an intermediate piece at the outer ends of the shaft. The joint between the flange and the hub can be achieved by bolt fastening or by splines. The advantage of a spline connection is that it is less expensive to make than a bolt fastening and that the shaft flange can be joined to the hub more rapidly during assembly.

In order to make it possible to make the spline teeth and grooves in the hub by shaving, which is the most rational method, the inner diameter of the hub in its outer region must be smaller than the inner diameter of the bearing housings axially inside thereof. In designs known up to now, this has created difficulty in assembly, especially of the axially outer bearing, since the outer bearing can not be pressed into the hub and locked from the outer end; rather it must be pressed into the hub from the other end and be locked by a lock ring inserted far into the hub from this end. The difficulty is here in the first place to mount and check the correct placement of the lock ring.

The purpose of the present invention is to remove the above mentioned disadvantage and to achieve a hub arrangement of the type described by way of introduction, in which both the assembly of said components and the checking of the correct placement thereof is more easily accomplished than in previously known arrangements.

This is achieved according to the invention by virtue of the fact that the radially outer raceways are made on a common ring, which forms a spacer which transmits axial force between axially outer and inner abutment surfaces on the hub, of which the inner surface is formed on a lock member detachably joined to the hub and disposed in the vicinity of the axially inner end of the hub.

The embodiment according to the invention eliminates the need to have a lock ring immediately inside the outer bearing. Instead, a corresponding lock ring is applied in a position where it is simple to put in place and where it can easily be checked as regards correct mounting. For assembly, the bearings are pressed in as a unit into the hub until the edge of the outer ring abuts against the abutment surface in the vicinity of the splines, whereafter the lock ring is put in place. This is a substantial simplification over the process for mounting the known designs, which involves pressing in the outermost bearing, putting in place the lock ring and pressing in the inner bearing against a flange in the hub.

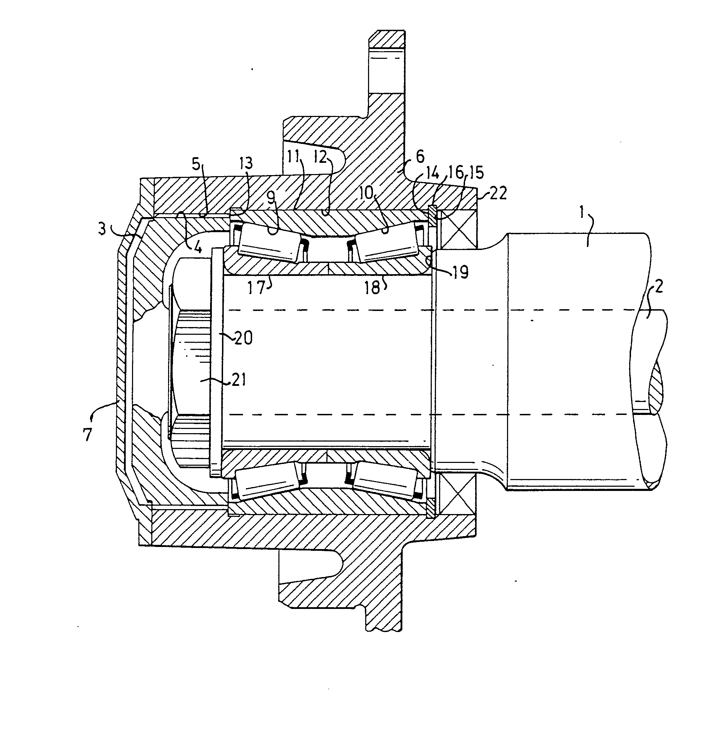

The invention will be described in more detail with reference to an embodiment shown in the accompanying drawing, where the figure shows a longitudinal section through a wheel hub for a motor vehicle.

In the figure, 1 designates the outer end of an axle or hub casing, the inner end of which is joined, in a conventional manner (not shown here), to the differential housing. In the casing 1, the axle shaft 2 is rotatably mounted and drivably connected to the differential. At its outer end, the shaft is joined to a flange 3, the periphery of which is made with grooves and teeth 4, 5, which engage corresponding grooves and teeth on a wheel hub 6. A cover plate 7 bolted to the hub prevents axial displacement of the shaft 2 outwards.

The hub 6 is mounted on the casing 1 in outer and inner conical roller bearings, which are made together in one unit. The outer raceways 9, 10 of the bearings are made on a common outer ring 11 pressed into the hub. As can be seen in the figure, the inner diameter of the hub in the bearing housing portion 12 is greater than the diameter in the region of the grooves 4 and teeth 5, which is required if they are to be produced by shaving. The outer ring is fixed axially between two abutment surfaces 13, 14, of which one 13 is made of the transition between the splines and the bearing housing portion 12 of the hub, and the other 14 of one end surface on a spring lock ring 15, which is snapped into a groove 16 in the hub. The inner rings 17, 18 of the bearings are fixed axially on the casing 1 between an abutment surface 19 and a washer 20 with a nut 21.

With the embodiment described, the bearings can be mounted as a unit. After pressing the outer ring into the hub, the bearing is fixed axially with the aid of the lock ring 15, which by virtue of its placement close to the inner end 22 of the hub is easily put in place. The common outer ring 11 eliminates the need to make the hub with an abutment flange for the outer bearing, which simplifies manufacture of the hub.

## Claims

1. Hub arrangement for a driven vehicle wheel, comprising a wheel hub (6) mounted on an axle casing (1) in axially inner and outer rolling-contact bearings, which hub (6) is joined, via a spline connection (4, 5) of smaller diameter than the outer diameter of the bearings, to an axle shaft (2) in the axle casing (1), characterized in that the radially outer raceways (9, 10) are made on a common ring (11), which forms a spacer which transmits axial force between axially outer and inner abutment surfaces (13, 14) on the hub (6), of which the inner surface is formed on a lock member (15) detachably joined to the hub and disposed in the vicinity of the axially inner end (22) of the hub.

2. Hub arrangement according to Claim 1, characterized in that the lock member is a lock ring (15) placed in a groove (16) in the hub (6).

## Patentansprüche

1. Nabe für ein angetriebenes Fahrzeugrad, mit einer auf einem Achsgehäuse (1) in axial inneren und äußeren Walzkontaktlagern montierten Radnabe (6), welche Radnabe mit einer Antriebswelle (2) in dem Achsgehäuse (1) über eine Keilwellenverbindung von kleinerem Durchmesser als dem Außendurchmesser der Lager verbunden ist,

dadurch gekennzeichnet, daß die radial äußeren Laufringe (9, 10) auf einem gemeinsamen Ring (11) hergestellt sind, welcher einen Abstandshalter bildet, welcher eine axiale Kraft zwischen axial äußeren und inneren Widerlageroberflächen (13, 14) an der Nabe (6) übermittelt, von welchen die innere Oberfläche auf einem mit der nabe lösbar verbundenen und in der Nähe des axial inneren Endes (22) der Nabe angeordneten Schließteil (15) gebildet ist.

2. Nabe nach Anspruch 1, dadurch gekennzeichnet, daß der Schließteil ein in einer Rille (16) der Nabe (6) plazierter Schließring (15) ist.

## Revendications

1. Agencement de moyeu pour roue motrice de véhicule comportant un moyeu de roue (6) monté sur un carter d'essieu (1) dans des paliers à contact roulant axialement intérieur et extérieur, lequel moyeu (6) est relié par une liaison à cannelures (4, 5) de diamètre inférieur du diamètre extérieur des paliers, à un arbre d'essieu (2) dans le carter d'essieu (1), caractérisé en ce que les chemins de roulement radialement extérieurs (9, 10) sont formés sur une bague commune (11) qui forme une entretoise qui transmet les forces axiales entre les surfaces de butée (13, 14) axialement intérieure et extérieure du moyeu (6), laquelle surface interne de butée est formée sur un élément de verrouillage (15) lié de manière amovible au moyeu et placé au voisinage de l'extrémité axialement intérieure (22) du moyeu.

2. Agencement de moyeu selon la revendication 1, caractérisé en ce que l'élément de verrouillage est une bague de verrouillage (15) placée dans une rainure (16) dans le moyeu (6).